# EUROPEAN PATENT SPECIFICATION

(11) **EP 3 315 451 B1**
(45) Date of publication and mention of the grant of the patent: **07.05.2025**
(21) Application number: 17198897.5
(22) Date of filing: 27.10.2017
(51) Int. Cl.: B66B 25/00, B66B 29/00

(54) **SENSOR ON ESCALATOR LANDING PLATE**
SENSOR AUF FAHRTREPPENLANDUNGSPLATTE
CAPTEUR SUR UNE PLAQUE D'ATTERRISSAGE D'UN ESCALIER MÉCANIQUE

(30) Priority: 28.10.2016 US 201615337784
(43) Date of publication of application: 02.05.2018
(73) Proprietor: Otis Elevator Company, Farmington, Connecticut 06032 (US)
(72) Inventor: SEKI, Hisanori, Shibayama-Machi, 289-1623 (JP); MEGURO, Daisuke, Shibayama-Machi, 289-1623 (JP); MIYAJIMA, Hiromitsu, Shibayama-Machi, 289-1623 (JP); IKEDA, Muneo, Shibayama-Machi, 289-1623 (JP)
(74) Representative: Schmitt-Nilson Schraud Waibel Wohlfrom Patentanwälte Partnerschaft mbB

(56) References cited:
- JP-A- 2007 210 710
- JP-A- 2008 285 263
- JP-A- 2009 249 064
- JP-A- H07 187 535

## Description

The present invention relates to a sensor system that is arranged on a landing plate of an escalator. In particular, the present invention relates to a sensor system for controlling escalator in order to avoid the risks of injuries that occur on escalators during congested periods and a method of controlling the same.

In recent years, the number of accidents that occur on escalators such as falling like dominos has been increasing, especially on escalators installed in train stations and venues where various programs are being featured, including concerts, exhibitions and sports events. Such accidents are primarily caused by crowds formed in the vicinity of the exit of an escalator, as they get stuck with nowhere to go, causing passengers getting off the escalator to push back to the escalator. Therefore, there is an increasing need for providing an escalator system to prevent such accidents and minimize the potential risks for injuries during congestion on an escalator.

For example, JP-A-2004-244183 discloses an optical detection system for an escalator arranged in the vicinity of the exit of the escalator to decelerate or stop the escalator at the time of congestion based on the moving speed of passengers. However, since the system is configured to arrange a plurality of optical detection devices to the ceiling and a traffic regulation frames disposed near the exit of the escalator, the main disadvantage of this system is that it requires relatively complicated arrangements and control techniques and relatively high installation costs. Thus, there exists in the art a need for improving a safety control system for an escalator.

JP 2009 249064 A discloses a sensor system in an escalator, wherein it is checked if a weight (W) applied on a landing plate of the escalator exceeds a threshold value for a certain period time and the escalator is decelerated or stopped depending on the checking result.

JP 2007 210710 A discloses a passenger conveyor capable of enhancing riding easiness of a passenger. A plurality of foot steps to be circulated/moved are provided between an upper doorway and a lower doorway. A pressure sensor for detecting distribution of a pressurized portion pressed by a doorway entry person when the doorway entry person rides on a predetermined range is laid on a floor of a lower doorway. An operation control device controls operation of an escalator based on the information from the pressure sensor.

JP H07 187535 A discloses a traffic slow surveying device which comprises. carpet-type pressure sensitive sensors installed in a plurality of points in a building, a receiving radio modem for receiving the data detected by these pressure sensitive sensors, a count data processing device connected to the modem, and housing a computer therein, and a display device for displaying the result computed and processed by the processing device as the traffic flow data.

JP 2008 285263 A discloses a passenger conveyor capable of calling attention of a user wearing a pair of shoes heel parts of which are slender. The passenger conveyor comprises a plurality of footsteps connected endlessly and to circularly move, a movable handrail to synchronously move with these footsteps and guided to a balustrade constituting member and a control device to control a drive constituted by including the footsteps and the movable handrail.

The present invention relates to a sensor system and a method of controlling operation of an escalator according to the appended claims.

Accordingly, it would be desirable to provide a simple sensor system that has fewer parts, is easy to install, and that can also be retrofitted to existing escalators.

It would also be desirable to provide a method of controlling an escalator using such sensor system that only requires a simple controlling method.

A sensor system according to the invention is disclosed in claim 1.

In some embodiments, sensor may be disposed at equally spaced intervals between 1 and 30 centimeters.

In some embodiments, each sensor may be configured to detect a pressure between 100 to 200 g/cm² so as to obtain a transition of ON/OFF states.

In some embodiments, the sensor system may be arranged in a range of at least one meter along the length direction from a comb plate.

In some embodiments, the control unit may be configured to scan ON state signals of all sensors at intervals between 100 and 200 milliseconds.

In some embodiments, control unit may be configured to detect a presence of a passenger lingered on the sensor system if the duration time of the ON state signal of a sensor exceeds a first threshold time.

In some embodiments, the control unit may be configured to decelerate the escalator if the rate of occupied width of passengers lingered on the sensor system exceeds a first threshold rate.

In some embodiments, the control unit may be configured to stop the escalator if the rate of occupied width of passengers lingered on the sensor system exceeds a second threshold rate greater than the first threshold rate.

In some embodiments, the oc-cupied width of passengers may include a width of the area where the sensors detect a passenger lingered on the sensor system and a width of an additional area to extend the width of the area where sensors detect a passenger lingered on the sensor system so as to simulate human body width.

In some embodiments, the control unit may be further configured to detect a presence of an object placed on the sensor system if the duration time of the ON state signal of a sensor exceeds a second threshold time longer than the first threshold time.

In some embodiments, the control unit may be further configured to detect a malfunction of the sensor if the duration time of the ON state signal of the sensor exceeds a third threshold time.

In some embodiments, the sensor may be selected from a group including a mechanical micro switch, a pressure sensor, an electrically conductive rubber for detecting resistance based on load pressure, and a metal-wire sensor formed by a plurality of wires arranged over the landing area of the landing plate.

In some embodiments, the sensor may comprise a metal-wire sensor formed by a plurality of wires arranged in a grid layout and configured to obtain ON state signal by contacting two lines intersecting with each other in response to a load presence.

According to another aspect of the present invention, a method of controlling operation of escalator using a sensor system arranged on a landing plate at the exit of the escalator is disclosed. The sensor system includes a plurality of sensors arranged over a landing area of the landing plate. Each sensor is disposed at predetermined grid intervals with respect to the width direction along the width between two balustrades and the length direction along the moving direction of the escalator. Each sensor is configured to detect a predetermined pressure so as to obtain a transition of ON/OFF states in response to a load presence. The method includes: scanning ON state signals of all sensors within a predetermined time period continuously to monitor a duration time of each ON state signal; comparing the duration time of each ON state signal with a threshold time to detect a presence of a passenger lingered on the sensor system; determining if each row of sensors arranged along the length direction of the sensor system at the predetermined grid intervals includes any sensor having duration time exceeding the threshold time; determining a rate of occupied width of passengers lingered on the sensor system with respect to the entire width of the sensor system based on the number of rows which include any sensor having duration time exceeding the threshold time; decelerating the escalator if the rate of occupied width of passengers lingered on the sensor system exceeds a first threshold rate; and stopping the operation of the escalator if the rate of occupied with of passengers lingered on the sensor system exceeds a second threshold rate.

In some embodiments, the method of controlling operation of escalator using a sensor system further may include: comparing the duration time of each ON state signal exceeding the threshold time with a second threshold time; and generating an alert to passengers on the escalator about the presence of an object on the sensor system if the duration time exceeds the second threshold time.

In some embodiments, the method of controlling operation of escalator using a sensor system further may include: comparing the duration time of each ON state signal exceeding the second threshold time with a third threshold time; determining if each row of sensors arranged along the length direction of the sensor system at the predetermined grid intervals includes any sensor having duration time exceeding the third threshold time; counting the number of sensors in each row exceeding the third threshold time; and generating a report to urge replacing whole sensor system if the number of sensors in each row exceeding the third threshold time exceeds a predetermined number.

In some embodiments, each sensor may be disposed at grid intervals between 1 and 30 centimeters.

In some embodiments, each sensor may be configured to detect a pressure between 100 to 200 g/cm² so as to obtain a transition of ON/OFF states.

In some embodiments, the sensor system may be arranged in a range of at least one meter along the length direction from a comb plate.

In some embodiments, the control unit may be configured to scan ON state signals of all sensors at intervals between 100 and 200 milliseconds.

In some embodiments, the threshold time may be set in a range between one and two seconds.

In some embodiments, the first threshold rate may be set to fifty percent of the entire width of the sensor system.

In some embodiments, the second threshold rate may be set to ninety percent of the entire width of the sensor system.

In some embodiments, the termining a rate of occupied width of passengers lingered on the sensor system is carried out based on the number of rows including rows corresponding to the area where the sensors detect a passenger lingered on the sensor system and additional rows corresponding to an additional area to extend the area where sensors detect a passenger lingered on the sensor system so as to simulate human body width.

In some embodiments, the second threshold time may be set to ten seconds or more.

In some embodiments, the third threshold time is set to one day or more.

These and other aspects of this disclosure will become more readily apparent from the following description and the accompanying drawings, which can be briefly described as follows.
Figure 1 is a schematic view showing one possible arrangement of a sensor system according to the present invention installed in a landing plate at the exit of an escalator.
Figure 2 is a top view of the sensor system according to the present invention installed in the landing plate at the exit of an escalator.
Figure 3A is a flow diagram showing a method of scanning check point duration time in accordance with the present invention.
Figure 3B illustrates a plurality of checkpoints formed by a plurality of sensors arranged on the sensor system according to the present invention.
Figure 4 is a flow diagram of determining a status of each check point in accordance with the present invention.
Figure 5A is a flow diagram of determining if each row of the checkpoints arranged along the length direction of the sensor system in accordance with the present invention includes any checkpoint in an abnormal condition.
Figure 5B illustrates a series of rows of the checkpoints arranged in a coordinate grid on the sensor system in accordance with the present invention.
Figure 6 is a flow diagram of determining occupied width of passengers lingered on the landing plate at the exit of an escalator according to the present invention.
Figure 7A illustrates occupied width of a passenger which includes rows each having at least one checkpoint in a lingering condition and additional rows corresponding to an extended "ON" area which simulate human body width.
Figure 7B illustrates occupied width of passengers lingered on the landing plate of an escalator exceeding fifty percent of the entire width of the escalator.
Figure 7C illustrates occupied width of passengers lingered on the landing plate of an escalator exceeding ninety percent of the entire width of the escalator.
Figure 7D illustrates that there is an object detected on the landing plate of an escalator.

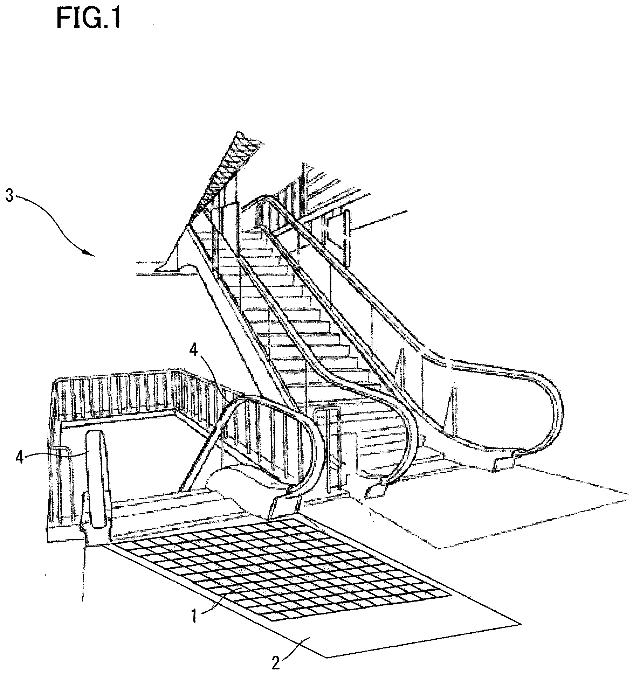

Figure 1 shows a sensor system 1 in accordance with the present invention installed in a landing plate 2 at the exit of an escalator 3. As shown in FIG. 1, the sensor system 1 is arranged over a landing area of the landing plate 2 of the escalator 3, i.e. the area which passengers most likely step on when exiting the escalator 3. Generally, the sensor system 1 is arranged along the entire width between two balustrades 4 of the escalator 3 and arranged in a range of at least one meter (or at least more than the average length of stride) along the moving direction of the escalator 3 from an escalator comb plate (not shown). It should be understood that the sensor system 1 disposed on the landing plate 2 may be arranged over a width larger than the entire width between two balustrades 4. However, the entire length less than one meter along the moving direction of the escalator 3 is not preferable since it may not be able to correctly detect passengers' movement.

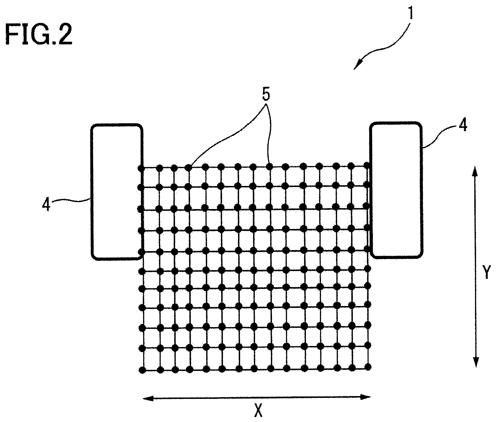

Figure 2 illustrates a top view of the sensor system 1 of the present invention installed in the landing plate 2 at the exit of the escalator 3. As shown FIG. 2, a plurality of sensors 5 (or checkpoints, CPᵢⱼ) is placed on the landing plate 2. The sensors 5 are arranged over the entire width between two balustrades 4 (hereinafter referred to as "the width" or "X-direction"), and arranged in a predetermined range, for example, at least one meter along the moving direction of the escalator 3 measured from the escalator comb plate (hereinafter referred to as "the length" or "Y-direction"). Furthermore, the sensors 5 are disposed in both X-direction and Y-direction at predetermined intervals, for example, 1 to 2 cm intervals. It should be understood that the spacing between each sensor 5 may be less than 1 cm intervals. However, the interval of more than 30 cm may not be preferable since it may not be able to correctly detect passengers' movement.

The sensor 5 constituting each check point may be any type of sensor switch including, but not limited to, any devices that can detect inputs based on load pressures consecutively such as a mechanical micro switch and a pressure sensor, an electrically conductive rubber which detects resistance based on load pressure, or a metal-wire sensor formed by a plurality of metal wires arranged in any shapes across the width direction (X-direction) and the length direction (Y-direction) of a landing plate of an escalator. Specifically, a metal-wire sensor configured to be arranged in a grid layout and configured to sense ON input by contacting two lines, one from lines in the X-direction and the other from lines in the Y-direction, in response to a passenger stepping on the lines is advantageous in that it is relatively non-breakable and inexpensive.

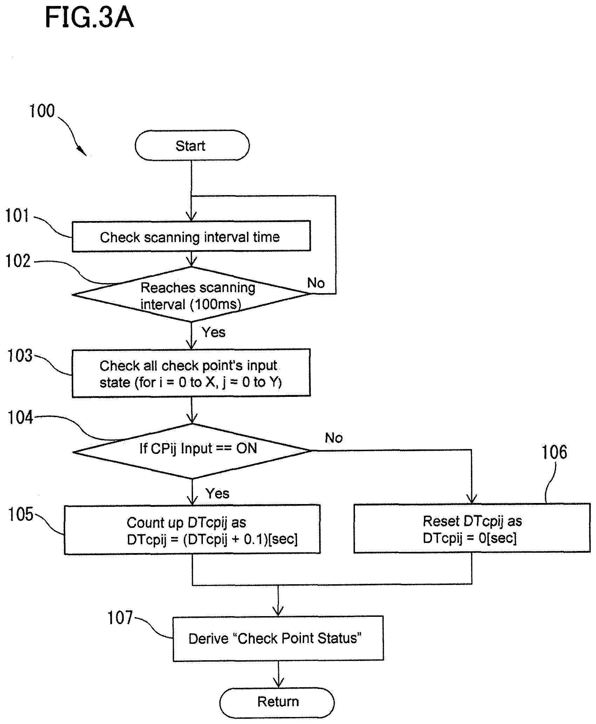

Each of the successive sensors 5 is configured to detect a predetermined pressure, for example, a pressure of 100 to 200 g/cm² so as to obtain a transition of ON/OFF states in response to a load presence. In other words, each sensor 5 is triggered as ON when the load exceeds 100 to 200 g/cm² in response to a passenger stepping on the sensor 5, and returns to OFF when the load gets lighter than the same predetermined value. Moreover, as described later with reference to FIG. 3A, all checkpoints CPᵢⱼ where the sensors 5 are arranged are configured to be scanned in a predetermined cycle, for example, at 100 milliseconds (ms) intervals, so as to constantly update the change in the input state (ON states) for tracking the movement of passengers getting off the escalator at the exit. It should be understood that the detecting pressure of the ON/OFF states may be less than 100 g/cm². However, the detecting pressure greater than 200 g/cm² is not preferable since it may not be able to correctly detect passengers' movement.

The method of detecting a passenger lingered around the exit of an escalator 3 and controlling the escalator operation in accordance with the present invention is described with reference to FIG. 3A to FIG. 6.

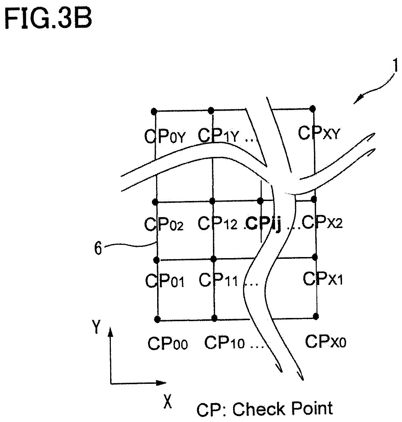

Figure 3A illustrates a flow diagram 100 of scanning check point duration time for each check point CPᵢⱼ which is formed by a sensor 5. Figure 3B illustrates a plurality of check points CPᵢⱼ corresponding to a plurality of sensors 5 arranged on the landing plate 2 at the exit of the escalator 3 as described above with reference to FIG. 2.

As shown in FIG. 3B, each checkpoint CPᵢⱼ is arranged on a coordinate grid 6 on the sensor system 1 disposed at the exit of landing plate 2, where the width direction corresponds to X-axis and the length direction corresponds to Y-axis, and each checkpoint CPᵢⱼ can be identified by an ordered pair of numbers (i, j) in the X-Y coordinate. For example, the ordered pair (x, y) can be indicated as CP_{xy}, where x denotes X-coordinate and y denotes Y-coordinate on the coordinate grid 6. As shown in FIG. 3B, the origin CP₀₀ is located at the intersection of the line on the X-axis and the line on the Y-axis. Note that CPᵢⱼ denotes an arbitrary checkpoint on the sensor system 1.

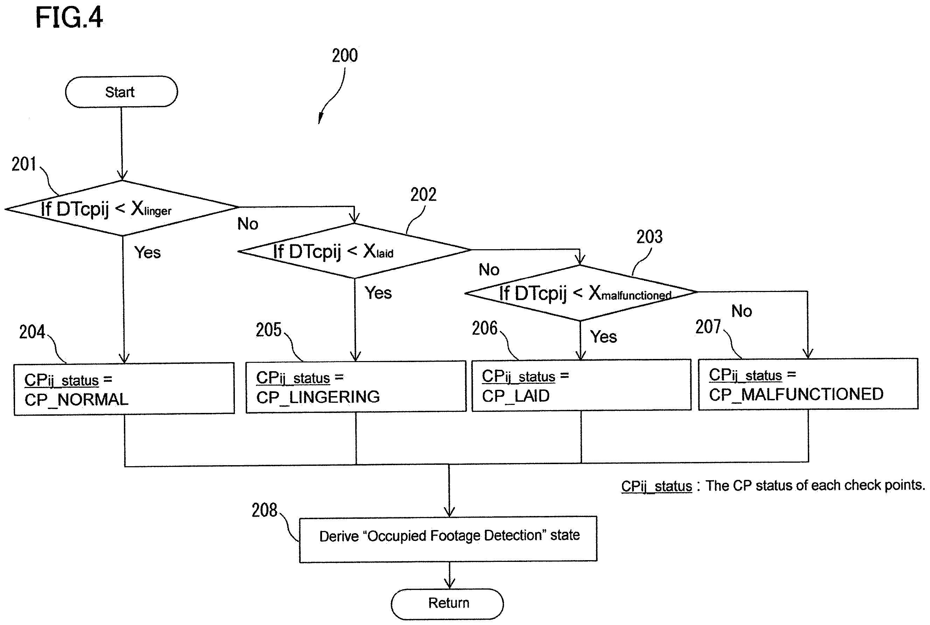

Again referring to FIG. 3A, operation starts from checking scanning interval time of all sensors 5 (step 101). In this embodiment, each checkpoint CPᵢⱼ is scanned for a programmable amount of time, for example, 100 milliseconds for scanning a passenger lingered on the landing plate 2, i.e. a passenger stayed longer than is necessary on the landing plate 2 after getting off the escalator 3. When the scanning is carried out for a predetermined interval (100 milliseconds) (step 102), the input state for all checkpoints, CP₀₀ to CP_{XY}, is determined (step 103). If the sensor system 1 detects that a passenger is stepped on a sensor 5 on a checkpoint CPᵢⱼ when getting off an escalator, i.e. if CPᵢⱼ input is ON (step 104), then a control unit (not shown) for operating check point duration time monitoring algorithm 100 as shown in FIG. 3A increments a counter DTcpij by 0.1 seconds (step 105). If a sensor 5 on a checkpoint CPᵢⱼ does not detect a passenger exiting the escalator, the control unit for operating this algorithm resets the duration time on a checkpoint CPᵢⱼ as DTcpij = 0sec (step 106). When the check point status of each of all sensors 5 is derived (step 107), then the check point status is stored in a memory (not shown) and this process continues to monitor a duration time of each checkpoints CPᵢⱼ for 100 milliseconds intervals in this embodiment. The duration time on each checkpoint, DTcpij derived from this algorithm is then transferred to the next algorithm as shown in FIG. 4.

Figure 4 illustrates a flow diagram 200 of determining a status of each check point CPᵢⱼ. In this algorithm, duration time of each check point DTcpij is compared with three types of threshold times, X_{linger}, X_{laid}, and X_{malfunction}, for determining checkpoint status of each check point, CPᵢⱼ_status. In this specification, X_{linger} refers to a duration time considered as a time derived from escalator speed when a passenger starts to linger around the exit of an escalator, for example, duration time of 1 second. X_{laid} refers to a duration time considered as a time that any object is placed on any checkpoint CPᵢⱼ, or a passenger possibly gets stuck on any checkpoint CPᵢⱼ, for example, duration time of 10 seconds. X_{malfunction} denotes a duration time considered as a time where any checkpoint CPᵢⱼ has been consecutively detected for a predetermined time period and unavailable as a checkpoint, for example, duration time of 1 day.

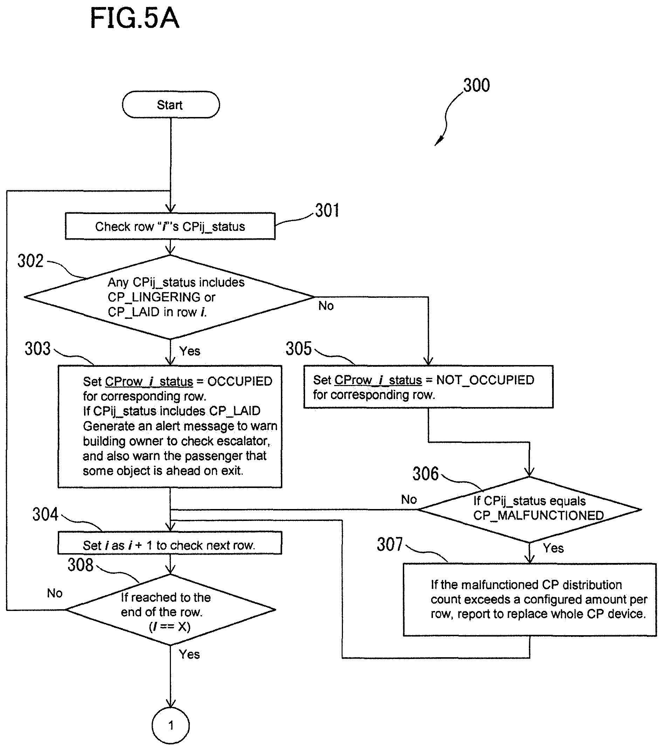

At step 201, the duration time of each check point DTcpij derived from the algorithm 100 is compared with a first threshold time X_{linger}. If the duration time DTcpij is less than X_{linger}, then the status of the checkpoint, CPᵢⱼ_status, is determined to be in a normal condition, CP_NORMAL (step 204). In other words, there is no passenger lingered on the checkpoint or no object placed on the checkpoint CPᵢⱼ. If the duration time DTcpij exceeds the first threshold time X_{linger}, then the duration time DTcpij is compared with a second threshold time, X_{laid} (step 202). If the duration time DTcpij is less than X_{laid}, the checkpoint status CPᵢⱼ_status is determined to be in a lingering condition, CP_LINGERING (step 205). It follows that there is a passenger lingered or stayed longer than the first threshold time (e.g. for more than 1 second) on the checkpoint CPᵢⱼ after getting off the escalator 3. If the duration time DTcpij exceeds the second threshold time X_{laid}, then the duration time DTcpij is compared with a third threshold time, X_{malfunction} (step 203). If the duration time DTcpij is less than the third threshold time X_{malfunction}, the status of the checkpoint CPᵢⱼ_status is determined to be in a laid condition, CP_LAID (step 206). Namely, there is an object placed on the checkpoint CPᵢⱼ or a passenger getting stuck on the checkpoint CPᵢⱼ for more than a predetermined time period (e.g. 10 seconds). If the duration time DTcpij exceeds the third threshold time X_{malfunction}, the checkpoint status CPᵢⱼ_status is determined to be in a malfunctioned condition, CP_MALFUNCTIONED (step 207). The check point status of each checkpoint, CPᵢⱼ_status derived from this algorithm 200 is stored in a memory (step 208) and this process returns to step 201 to continue this process. The check point status of each sensor 5 is then transferred to the next algorithm as shown in FIG. 5A.

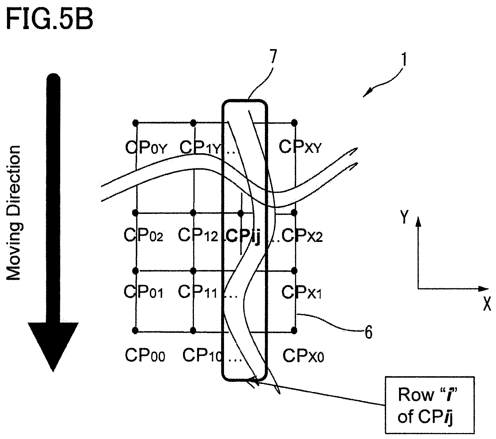

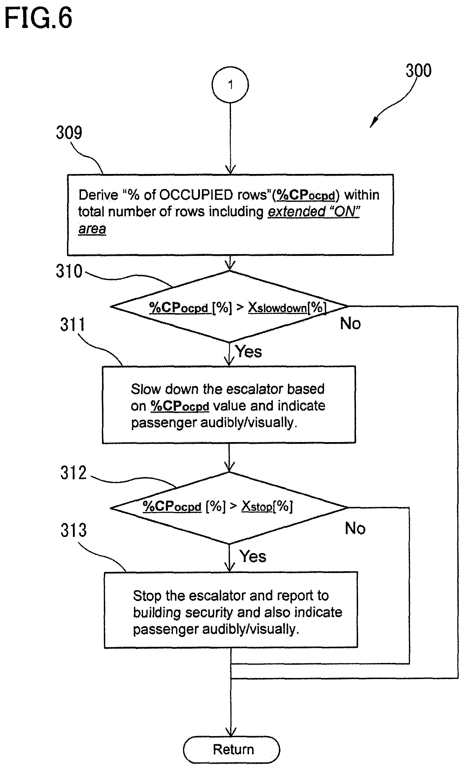

Figure 5A and Figure 6 illustrate a series of flow diagrams 300 of the detection algorithm of occupied width of passengers lingered on the landing plate according to the present invention. At step 301, operation starts from checking the check point status of each row "i" of the checkpoints CPᵢⱼ arranged on the coordinate grid 6 on the sensor system 1 as shown in Figures 3B and 5B. The check point status of each row "i" is derived from the status of each checkpoint, CPᵢⱼ_status, which is obtained from the algorithm 200 shown in FIG. 4. With reference to Figure 5B, it can be seen that the row "i" is defined by a row 7 of checkpoints, CPᵢ₀, CPᵢₗ, ..., CP_{iY}, arranged along the moving direction, i.e. arranged along the entire length (Y-axis) of the sensor system 1. For example, the row "1" is the 1st row of checkpoints, CP₁₀, CP₁₁, CP₁₂, ..., CP_{1Y}.

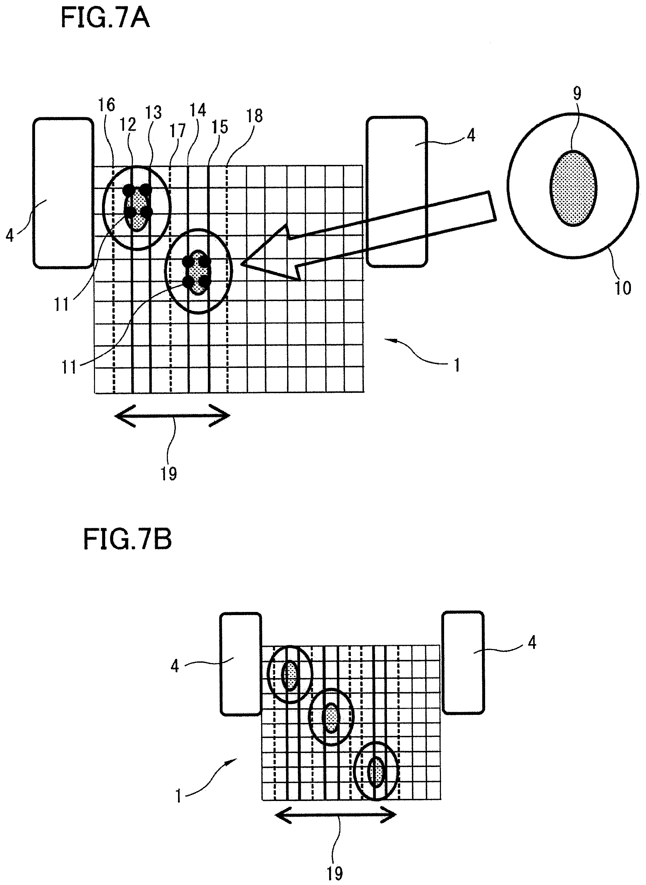

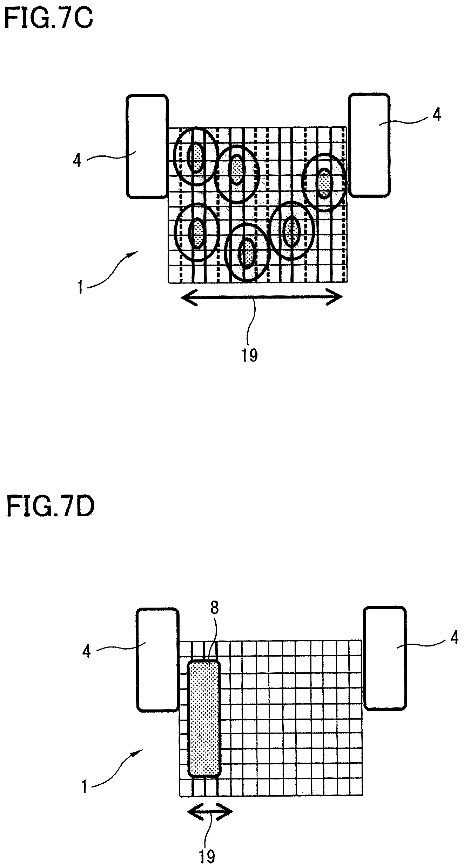

At step 302, the algorithm shown in FIG. 5A checks to see whether each row "i" of the checkpoints CPᵢⱼ arranged on the coordinate grid 6 on the sensor system 1 includes any checkpoint in a lingering status CP_LINGERING or in a laid status CP_LAID. If the row "i" includes any checkpoint in a CP_LINGERING or CP_LAID status, the row is determined to be in a occupied condition and the control unit for carrying out this algorithm 300 sets CP_{row}_i_status=OCCUPIED (step 303), followed by the incrementing of the count "i" by one to check next row "i+1" (step 304). At step 303, if the row "i" includes any checkpoint in a CP_LAID status, it follows that there is an object 8 placed on the landing plate 2 as shown in FIG. 7D or a passenger getting stuck on the landing plate 2. The control unit immediately generates an alert message to a building owner or a building administrative company to urge checking the escalator 3 and also warns passengers on the escalator 3 that there is an object detected at the exit ahead. Alternatively, the control unit may further transmit a signal to the escalator 3 to slow down the escalator 3 in addition to generating an alert to a building owner/building administrative company and passengers until the checkpoint status CPᵢⱼ _status=CP_LAID disappears. It should be understood that the alert message may be transmitted to a building owner or a building administrative company via any means including, but not limited to, internet, fixed lines, etc. The alert message to passengers may be any audible message using speakers or any other audible devices, any visual message using displays, indicator lamps or any other visual devices, or a combination of both.

If there is no checkpoint in a lingering status CP_LINGERING or in a laid status CP_LAID included in the row "i" at step 302, the control unit sets CP_{row}_i_status=NOT_OCCUPIED for the corresponding row "i" (step 305) and proceeds to step 306 which checks whether the row "i" includes any checkpoint in a malfunctioned condition, CP_MALFUNCTIONED. If there is no checkpoint in a malfunctioned condition in the row "i", the algorithm proceeds to step 304 which directs the incrementing of the count value i by one and proceeds to step 308. If the row "i" includes any checkpoint in a malfunctioned condition, i.e. if there is any checkpoint where CPᵢⱼ_status=CP_MALFUNCTIONED, then the malfunctioned checkpoint CPᵢⱼ is stored in a memory and the number of the malfunctioned checkpoints per row is counted (step 307), followed by the incrementing of the count "i" by one (step 304) and then proceeds to step 308. At step 307, if the malfunctioned checkpoint count per row exceeds a predetermined count, the control unit generates a report to a building owner or a building administrative company to replace whole sensor system 1.

Subsequently, the control unit checks to see if the count value "i" reaches to the end of row "X" in the coordinate grid 6 (I = = X) (step 308). If the count value does not reach to the end of row "X", then the algorithm returns to step 301 to repeat process. This loop continues until all rows are checked to see whether there is any checkpoint in a lingering status, in a laid status or in a malfunctioned status, with respect to each row "i". When the count value "i" reaches to the end of row "X", the control unit then proceeds to the algorithm in FIG. 6 which determines the occupied width of passengers lingered on the landing plate 2 at the exit of the escalator 3 and controls the operation of the escalator based on the occupied width of passengers. Following the execution of step 308 in FIG. 5A, the control unit proceeds to step 309 in FIG. 6 which derives the percentage of rows (% CP_{ocpd}) occupied by passengers lingered on the landing plate 2 at the exit of the escalator 3 with respect to the total number of rows "X". Note that the percentage of rows occupied by passengers lingered on the landing plate 2 (hereinafter referred to as "percentage of occupied rows") may include extended "ON" area which will be better understood with reference to Figure 7A.

As shown in FIG. 7A, the extended "ON" area 10 is added to extend the area 9 where the checkpoints detect a passenger lingered on the landing plate 2. Assuming that there is a passenger lingered on the landing plate 2 at the exit of the escalator 3. The sensor system 1 will detect eight checkpoints 11 in a lingering condition as shown in FIG. 7A, each of four checkpoints corresponds to one of his footprints. By executing the algorithm shown in FIG. 5A, the four rows 12, 13, 14, 15 corresponding to the eight checkpoints 11 in a lingering condition are counted as occupied rows. However, since the human body width is larger than the width between two footprints (in this case, the total width of four occupied rows 12, 13, 14, 15), additional rows 16, 17, 18 corresponding to the extended "ON" area 10 are added to the four occupied rows to simulate human occupied width. Accordingly, both the rows 12, 13, 14, 15 having at least one checkpoint which is in CP_LINGERING, CP_LAID, or CP_MALFUNCTIONED condition and the additional rows 16, 17, 18 corresponding to the width of the extended "ON" area 10 are counted as occupied row.

In one embodiment, three to five additional rows corresponding to the extended "ON" area 10 are counted as occupied rows in addition to the rows corresponding to the area 9 where the input status is CP_LINGERING, CP_LAID, or CP_MALFUNCTIONED. For example, if the rows "i" and "k" include at least one CP_LINGERING, CP_LAID, or CP_MALFUNCTIONED checkpoint, then the additional rows "i-5", "i-4", "i-3", "i-2", "i-1" and "i+1", "i+2", "i+3", "i+4", "i+5" are added to the row "i" as occupied rows. Likewise, the additional rows "k-5", "k-4", "k-3", "k-2", "k-1" and "k+1", "k+2", "k+3", "k+4", "k+5" are added to the row "k" as occupied rows. In another embodiment, more than five additional rows corresponding to the extended "ON" area may be counted as occupied rows in addition to the rows which include at least one checkpoint in a CP_LINGERING, CP_LAID, or CP_MALFUNCTIONED condition. The number of the additional rows corresponding to the width of the extended "ON" area may be selected depending on the use situation of the sensor system 1, such as the entire width of the escalator 3, the spacing between each sensor 5, etc.

Again referring to FIG. 6, at step 309, the percentage of occupied rows (% CP_{ocpd}), including both rows having at least one checkpoint in a CP_LINGERING, CP_LAID, or CP_MALFUNCTIONED condition and rows corresponding to the extended "ON" area, with respect to the total number of rows is determined. The percentage of occupied rows (% CP_{ocpd}) corresponds to the occupied width of one or more passengers/objects as shown by arrow 19 in FIGS. 7A-7D. The control unit then compares the percentage of occupied rows (% CP_{ocpd}) with a first threshold rate, X_{slowdown} [%] (step 310). X_{slowdown} denotes a predetermined value in percentage which triggers the escalator 3 to slow down. In one embodiment, X_{slowdown} is set to fifty percent (50%). If the percentage of occupied rows (% CP_{ocpd}), i.e. the occupied width 19 of passengers lingered at the exit of the escalator 3 exceeds X_{slowdown} as shown in FIG. 7B, then the control unit transmits a signal to slow down the escalator 3 based on the % CP_{ocpd} value and indicate passengers the deceleration of the escalator 3 audibly and/or visually (step 311), followed by proceeding to step 312. It should be understood that multi-level speed control of the escalator 3 may be provided based on the comparison of the percentage of occupied rows (% CP_{ocpd}) with a plurality of X_{slowdown} values. A plurality of X_{slowdown} values may be preset as appropriate according to the service conditions of the escalator 3. If the percentage of occupied rows (% CP_{ocpd}) is less than X_{slowdown}, the control unit determines that the escalator 3 is in a normal condition and returns to step 301 (FIG. 5A) to repeat process.

Following the step 311, the percentage of occupied rows (% CP_{ocpd}) is further compared with a second threshold rate, Xₛₜₒₚ [%] (step 312). Xₛₜₒₚ is a predetermined value in percentage which triggers the escalator 3 to stop. In one embodiment, X_{slowdown} is set to ninety percent (90%). However, it should be understood that X_{slowdown} value may be determined as appropriate according to the service conditions of the escalator 3. At step 312, if the percentage of occupied rows (% CP_{ocpd}), i.e. the occupied width 19 of passengers lingered at the exit of the escalator 3 exceeds Xₛₜₒₚ as shown in FIG. 7C, the control unit immediately transmits a signal to stop the escalator 3 and indicate passengers the emergency stop audibly and/or visually, as well as generating a report to a building owner or a building administrative company (step 313). Following the execution of step 313, the algorithm 300 returns to step 301 (FIG. 5A) to repeat process.

If the percentage of occupied rows (% CP_{ocpd}) is less than Xₛₜₒₚ, the control unit determines that the escalator 3 is in a lingering condition (where X_{slowdown} [%] < % CP_{ocpd} [%] < Xₛₜₒₚ [%]) and returns to step 301 (FIG. 5A) to repeat process.

According to the present invention, by employing a plurality of sensor switches arranged in a grid pattern in the width direction and the length direction over a landing area of a landing plate at the exit of an escalator as a sensor system, it is possible to detect abnormal conditions, including crowding with passengers getting off the escalator at the exit, presence of an object at the exit, and malfunction of the system, with the use of a simple and inexpensive structure compared to a conventional abnormal condition detection system for an escalator including optical sensors and the like. In particular, since the sensor system of the present invention has a structure that allows for an easy installation on the landing plate of a conventional escalator system, it can be easily retrofitted to existing escalator system.

The sensor system of the present invention is configured to detect only the residence time of a person on a landing plate in response to a ON state signal of sensors rather than detecting the number of people staying in the vicinity of the exit or moving direction of the people, and configured to control operation of the escalator based on the residence time of a person on the landing plate and the occupied width of the person with respect to the width of the escalator. Therefore, by applying the sensor system with simple control algorithm in accordance with the present invention, more simple and more accurate control can be achieved as compared with conventional escalator control systems.

Although a particular embodiment has been described with respect to installation into an escalator, it should be understood that it can also be utilized for a moving sidewalk.

While the present invention has been particularly shown and described with reference to the exemplary embodiments as illustrated in the drawings, it will be recognized by those skilled in the art that various modifications may be made without departing from the scope of the invention as disclosed in the accompanying claims.

## Claims

1. A sensor system (1) for controlling operation of an escalator (3) arranged on a landing plate (2) at the exit of the escalator (3), the sensor system (1) comprising:
a plurality of sensors (5) arranged over a landing area of the landing plate (2), each sensor disposed at predetermined intervals with respect to the width direction (X) along the width between two balustrades (4) and the length direction (Y) along the moving direction of the escalator (3), each sensor configured to detect a predetermined pressure so as to obtain a transition of ON/OFF states in response to a load presence; and
a control unit for scanning ON state signals of all sensors (5) within a predetermined time period continuously,
wherein the control unit is configured to detect a presence of a passenger lingered on the sensor system (1) in response to a duration time of ON state signal of each sensor by comparing (200) the duration time of each ON state signal with a threshold time, and
**characterised in that** the control unit is configured to:
determine (301-308) if each row of sensors arranged along the length direction (Y) of the sensor system (1) at the predetermined grid intervals includes any sensor having duration time exceeding the threshold time;
determine (309) a rate of occupied width of passengers lingered on the sensor system (1) with respect to the entire width of the sensor system (1) based on the number of rows which include any sensor having duration time exceeding the threshold time; and
decelerate or stop the escalator (3) in response to a rate of occupied width of passengers lingered on the sensor system (1) with respect to the entire width of the sensor system (1) by decelerating (311) the escalator (3) if the rate of occupied width of passengers lingered on the sensor system (1) exceeds a first threshold rate; and stopping (313) the operation of the escalator (3) if the rate of occupied with of passengers lingered on the sensor system (1) exceeds a second threshold rate.

2. The sensor system of claim 1, wherein each sensor is disposed at equally spaced intervals between 1 and 30 centimeters.

3. The sensor system of claim 1 or 2, wherein each sensor is configured to detect a pressure between 100 to 200 g/cm² so as to obtain a transition of ON/OFF states.

4. The sensor system of any of claims 1 to 3, wherein the sensor system (1) is arranged in a range of at least one meter along the length direction (Y) from a comb plate.

5. The sensor system of any of claims 1 to 4, wherein the control unit is configured to scan ON state signals of all sensors (5) at intervals between 100 and 200 milliseconds.

6. The sensor system of any of claims 1 to 5, wherein the control unit is configured to detect a presence of a passenger lingered on the sensor system (1) if the duration time of the ON state signal of a sensor exceeds a first threshold time.

7. The sensor system of any of claims 1 to 6, wherein the control unit is configured to decelerate the escalator (3) if the rate of occupied width of passengers lingered on the sensor system (1) exceeds a first threshold rate, and wherein the control unit is configured to stop the escalator (3) if the rate of occupied width of passengers lingered on the sensor system (1) exceeds a second threshold rate greater than the first threshold rate.

8. The sensor system of any of claims 1 to 7, wherein the occupied width of passengers includes a width of the area where the sensors (5) detect a passenger lingered on the sensor system (1) and a width of an additional area to extend the width of the area where sensors detect a passenger lingered on the sensor system (1) so as to simulate human body width.

9. The sensor system of any of claims 6 to 8, wherein the control unit is further configured to detect a presence of an object placed on the sensor system (1) if the duration time of the ON state signal of a sensor exceeds a second threshold time longer than the first threshold time; and/or wherein the control unit is further configured to detect a malfunction of the sensor if the duration time of the ON state signal of the sensor exceeds a third threshold time.

10. The sensor system of any of claims 1 to 9, wherein the sensor is selected from a group including a mechanical micro switch, a pressure sensor, an electrically conductive rubber for detecting resistance based on load pressure, and a metal-wire sensor formed by a plurality of wires arranged over the landing area of the landing plate; wherein particularly the sensor comprises a metal-wire sensor formed by a plurality of wires arranged in a grid layout and configured to obtain ON state signal by contacting two lines intersecting with each other in response to a load presence.

11. A method of controlling operation of an escalator (3) using a sensor system (1) arranged on a landing plate (2) at the exit of the escalator (3), the sensor system (1) comprising a plurality of sensors (5) arranged over a landing area of the landing plate (2), each sensor disposed at predetermined grid intervals with respect to the width direction (X) along the width between two balustrades (4) and the length direction (Y) along the moving direction of the escalator (3), each sensor configured to detect a predetermined pressure so as to obtain a transition of ON/ OFF states in response to a load presence, the method comprising:
scanning (103) ON state signals of all sensors (5) within a predetermined time period continuously to monitor a duration time of each ON state signal;
**characterised by**:
comparing (200) the duration time of each ON state signal with a threshold time to detect a presence of a passenger lingered on the sensor system (1);
determining (301-308) if each row of sensors arranged along the length direction (Y) of the sensor system (1) at the predetermined grid intervals includes any sensor having duration time exceeding the threshold time;
determining (309) a rate of occupied width of passengers lingered on the sensor system (1) with respect to the entire width of the sensor system (1) based on the number of rows which include any sensor having duration time exceeding the threshold time;
decelerating (311) the escalator (3) if the rate of occupied width of passengers lingered on the sensor system (1) exceeds a first threshold rate; and
stopping (313) the operation of the escalator (3) if the rate of occupied with of passengers lingered on the sensor system (1) exceeds a second threshold rate.

12. The method of claim 11, wherein the sensor system (1) used in the method is configured as claimed in any of claims 1 to 10.

13. The method of claim 11 or 12, further comprising:
comparing the duration time of each ON state signal exceeding the threshold time with a second threshold time;
generating an alert to passengers on the escalator about the presence of an object on the sensor system if the duration time exceeds the second threshold time;
comparing the duration time of each ON state signal exceeding the second threshold time with a third threshold time;
determining if each row of sensors arranged along the length direction of the sensor system at the predetermined grid intervals includes any sensor having duration time exceeding the third threshold time;
counting the number of sensors in each row exceeding the third threshold time; and
generating a report to urge replacing whole sensor system if the number of sensors in each row exceeding the third threshold time exceeds a predetermined number.

14. The method of any of claims 11 to 13, wherein the threshold time is set in a range between one and two seconds; and/or wherein the first threshold rate is set to fifty percent of the entire width of the sensor system; and/or wherein the second threshold rate is set to ninety percent of the entire width of the sensor system.

15. The method of claim 13, wherein the second threshold time is set to ten seconds or more, and/or wherein the third threshold time is set to one day or more.

## Patentansprüche

1. Sensorsystem (1) zur Steuerung des Betriebs einer Fahrtreppe (3), das auf einer Landungsplatte (2) am Ausgang der Fahrtreppe (3) angeordnet ist, wobei das Sensorsystem (1) Folgendes umfasst:
eine Vielzahl von Sensoren (5), die über einem Landungsbereich der Landungsplatte (2) angeordnet sind, wobei jeder Sensor in vorbestimmten Intervallen in Bezug auf die Breitenrichtung (X) entlang der Breite zwischen zwei Balustraden (4) und die Längsrichtung (Y) entlang der Bewegungsrichtung der Fahrtreppe (3) angeordnet ist, wobei jeder Sensor so konfiguriert ist, dass er einen vorbestimmten Druck erfasst, um einen Übergang von EIN/AUS-Zuständen in Reaktion auf das Vorhandensein einer Last zu erhalten; und
eine Steuereinheit zum kontinuierlichen Scannen der EIN-Zustandssignale aller Sensoren (5) innerhalb eines vorbestimmten Zeitraums,
wobei die Steuereinheit so konfiguriert ist, dass sie ein Vorhandensein eines Passagiers, der auf dem Sensorsystem (1) verweilt, als Reaktion auf eine Dauer des EIN-Zustandssignals jedes Sensors durch Vergleichen (200) der Dauer jedes EIN-Zustandssignals mit einer Schwellenwertzeit erfasst, und
**dadurch gekennzeichnet, dass** die Steuereinheit so konfiguriert ist, dass sie:
bestimmt (301-308), ob jede Reihe von Sensoren, die entlang der Längsrichtung (Y) des Sensorsystems (1) in den vorbestimmten Rasterabständen angeordnet sind, einen beliebigen Sensor enthält, dessen Zeitdauer die Schwellenzeit überschreitet;
zu bestimmt (309), ob eine Rate der belegten Breite von Passagieren, die auf dem Sensorsystem (1) verweilen, in Bezug auf die gesamte Breite des Sensorsystems (1) auf der Grundlage der Anzahl der Reihen, die einen Sensor mit einer die Schwellenwertzeit überschreitenden Verweildauer aufweist; und
die Fahrtreppe (3) in Reaktion auf eine Rate der belegten Breite von Passagieren, die sich auf dem Sensorsystem (1) aufhalten, in Bezug auf die gesamte Breite des Sensorsystems (1) zu verlangsamen oder anzuhalten, indem die Fahrtreppe (3) verlangsamt wird (311), wenn die Rate der belegten Breite der Passagiere, die auf dem Sensorsystem (1) verweilen, eine erste Schwellenrate überschreitet; und Anhalten (313) des Betriebs der Fahrtreppe (3), wenn die Rate der belegten Breite der Passagiere, die auf dem Sensorsystem (1) verweilen, eine zweite Schwellenrate überschreitet.

2. Das Sensorsystem nach Patentanspruch 1, wobei jeder Sensor in gleichmäßigen Abständen zwischen 1 und 30 Zentimetern angeordnet ist.

3. Das Sensorsystem nach Patentanspruch 1 oder 2, wobei jeder Sensor so konfiguriert ist, dass er einen Druck zwischen 100 und 200 g/cm² erfasst, um einen Übergang von EIN/AUS-Zuständen zu erlangen.

4. Das Sensorsystem nach einem der Patentansprüche 1 bis 3, wobei das Sensorsystem (1) in einem Bereich von mindestens einem Meter entlang der Längsrichtung (Y) von einer Kammplatte angeordnet ist.

5. Das Sensorsystem nach einem der Patentansprüche 1 bis 4, wobei die Steuereinheit so konfiguriert ist, dass sie EIN-Zustandsignale aller Sensoren (5) in Intervallen zwischen 100 und 200 Millisekunden abtastet.

6. Sensorsystem nach einem der Patentansprüche 1 bis 5, wobei die Steuereinheit so konfiguriert ist, dass sie die Anwesenheit eines Passagiers, der sich auf dem Sensorsystem (1) aufgehalten hat, erfasst, wenn die Dauer des EIN-Zustandssignals eines Sensors eine erste Schwellenwertzeit überschreitet.

7. Das Sensorsystem nach einem der Patentansprüche 1 bis 6, wobei die Steuereinheit so konfiguriert ist, dass sie die Fahrtreppe (3) verlangsamt, wenn die Rate der belegten Breite der auf dem Sensorsystem (1) verweilenden Passagiere eine erste Schwellenrate überschreitet, und wobei die Steuereinheit so konfiguriert ist, dass sie die Fahrtreppe (3) anhält, wenn die Rate der belegten Breite der auf dem Sensorsystem (1) verweilenden Passagiere eine zweite Schwellenrate überschreitet, die größer ist als die erste Schwellenrate.

8. Das Sensorsystem nach einem der Patentansprüche 1 bis 7, wobei die belegte Breite von Passagieren eine Breite des Bereichs, in dem die Sensoren (5) einen auf dem Sensorsystem (1) verweilenden Passagier erfassen, und eine Breite eines zusätzlichen Bereichs einschließt, um die Breite des Bereichs, in dem Sensoren einen auf dem Sensorsystem (1) verweilenden Passagier erfassen, zu erweitern, um die Breite eines menschlichen Körpers zu simulieren.

9. Das Sensorsystem nach einem der Patentansprüche 6 bis 8, wobei die Steuereinheit ferner so konfiguriert ist, dass sie das Vorhandensein eines auf dem Sensorsystem (1) platzierten Objekts erfasst, wenn die Dauer des EIN-Zustandssignals eines Sensors eine zweite Schwellenwertzeit überschreitet, die länger als die erste Schwellenwertzeit ist; und/oder wobei die Steuereinheit ferner so konfiguriert ist, dass sie eine Fehlfunktion des Sensors erfasst, wenn die Dauer des EIN-Zustandssignals des Sensors eine dritte Schwellenwertzeit überschreitet.

10. Sensorsystem nach einem der Patentansprüche 1 bis 9, wobei der Sensor aus einer Gruppe ausgewählt ist, die einen mechanischen Mikroschalter, einen Drucksensor, einen elektrisch leitfähigen Gummi zur Erfassung eines Widerstands auf der Grundlage des Lastdrucks und einen Metalldrahtsensor beinhaltet, der aus einer Vielzahl von Drähten gebildet ist, die über dem Landebereich der Landeplatte angeordnet sind; wobei insbesondere der Sensor einen Metalldrahtsensor umfasst, der durch eine Vielzahl von Drähten gebildet ist, die in einer Gitteranordnung angeordnet und so konfiguriert sind, dass sie ein EIN-Zustandssignal durch Kontaktieren zweier sich schneidender Leitungen als Reaktion auf eine vorhandene Last erlangen.

11. Ein Verfahren zur Steuerung des Betriebs einer Fahrtreppe (3) unter Verwendung eines Sensorsystems (1), das auf einer Landungsplatte (2) am Ausgang der Fahrtreppe (3) angeordnet ist, wobei das Sensorsystem (1) eine Vielzahl von Sensoren (5) umfasst, die über einem Landungsbereich der Landungsplatte (2) angeordnet sind, wobei jeder Sensor in vorbestimmten Rasterabständen in Bezug auf die Breitenrichtung (X) entlang der Breite zwischen zwei Balustraden (4) und die Längenrichtung (Y) entlang der Bewegungsrichtung der Fahrtreppe (3) angeordnet ist, wobei jeder Sensor so konfiguriert ist, dass er einen vorbestimmten Druck erfasst, um einen Übergang von EIN/AUS-Zuständen als Reaktion auf eine vorhandene Last zu erlangen, wobei das Verfahren Folgendes umfasst:
kontinuierliches Scannen (103) von EIN-Zustands-Signalen aller Sensoren (5) innerhalb eines vorbestimmten Zeitraums, um die Dauer jedes EIN-Zustands-Signals zu überwachen;
**gekennzeichnet durch**:
Vergleichen (200) der Dauer jedes EIN-Zustandssignals mit einer Schwellenwertzeit, um die Anwesenheit eines Passagiers zu erkennen, der auf dem Sensorsystem verweilt (1);
bestimmt (301-308), ob jede Reihe von Sensoren, die entlang der Längsrichtung (Y) des Sensorsystems (1) in den vorbestimmten Rasterabständen angeordnet sind, einen Sensor aufweist, dessen Dauer die Schwellenwertzeit überschreitet;
Bestimmt (309) einer Rate der belegten Breite von Passagieren, die auf dem Sensorsystem (1) verweilten, in Bezug auf die gesamte Breite des Sensorsystems (1), basierend auf der Anzahl von Reihen, die irgendeinen Sensor mit einer Zeitdauer beinhalten, welche die Schwellenzeit überschreitet;
verlangsamen (311) der Fahrtreppe (3), wenn die Rate der belegten Breite der Passagiere, die auf dem Sensorsystem (1) verweilt, eine erste Schwellenrate überschreitet; und
anhalten (313) des Betriebs der Fahrtreppe (3), wenn die Rate der belegten Fahrgastplätze auf dem Sensorsystem (1) eine zweite Schwellenrate überschreitet.

12. Das Verfahren nach Patentanspruch 11, wobei das in dem Verfahren verwendete Sensorsystem (1) wie in einem der Ansprüche 1 bis 10 beansprucht konfiguriert ist.

13. Das Verfahren nach Patentanspruch 11 oder 12, das ferner umfasst:
Vergleichen der Dauer jedes EIN-Zustandssignals, das die Schwellenwertzeit überschreitet, mit einer zweiten Schwellenwertzeit;
Generieren einer Warnung an die Fahrgäste auf der Fahrtreppe über das Vorhandensein eines Objekts auf dem Sensorsystem, wenn die Dauer die zweite Schwellenwertzeit überschreitet;
Vergleichen der Dauer jedes EIN-Zustandssignals, das die zweite Schwellenwertzeit überschreitet, mit einer dritten Schwellenwertzeit;
Bestimmt, ob jede Reihe von Sensoren, die entlang der Längsrichtung des Sensorsystems in den vorbestimmten Rasterintervallen angeordnet sind, einen Sensor enthält, dessen Zeitdauer die dritte Schwellenzeit überschreitet;
Zählen der Anzahl von Sensoren in jeder Reihe, die dritte Schwellenwertzeit überschreiten; und
Generieren eines Berichts, um den Austausch des gesamten Sensorsystems zu empfehlen, wenn die Anzahl der Sensoren in jeder Reihe, die den dritten Schwellenwert überschreitet, eine vorgegebene Anzahl überschreitet.

14. Das Verfahren nach einem der Patentansprüche 11 bis 13, wobei die Schwellenwertzeit auf einen Bereich zwischen einer und zwei Sekunden eingestellt ist; und/oder wobei die erste Schwellenwertrate auf fünfzig Prozent der gesamten Breite des Sensorsystems eingestellt ist; und/oder wobei die zweite Schwellenwertrate auf neunzig Prozent der gesamten Breite des Sensorsystems eingestellt ist.

15. Das Verfahren nach Patentanspruch 13, wobei die zweite Schwellenwertzeit auf zehn Sekunden oder mehr und/oder die dritte Schwellenwertzeit auf einen Tag oder mehr eingestellt ist.

## Revendications

1. Système de capteur (1) pour contrôler le fonctionnement d'un escalier mécanique (3) disposé sur une plaque d'atterrissage (2) à la sortie de l'escalier mécanique (3), le système de capteur (1) comprenant :
une pluralité de capteurs (5) disposés sur une zone d'atterrissage de la plaque d'atterrissage (2), chaque capteur étant disposé à des intervalles prédéterminés par rapport à la direction de la largeur (X) le long de la largeur entre deux balustrades (4) et à la direction de la longueur (Y) le long de la direction de déplacement de l'escalier mécanique (3), chaque capteur étant configuré pour détecter une pression prédéterminée de manière à obtenir une transition d'états MARCHE/ARRÊT en réponse à une présence de charge ; et
une unité de commande permettant de balayer en continu les signaux d'état MARCHE de tous les capteurs (5) dans une période de temps prédéterminée,
dans lequel l'unité de commande est configurée pour détecter une présence d'un passager attardé sur le système de capteur (1) en réponse à une durée de signal d'état MARCHE de chaque capteur en comparant (200) la durée de chaque signal d'état MARCHE avec un temps seuil, et
**caractérisé en ce que** l'unité de commande est configurée pour :
déterminer (301-308) si chaque rangée de capteurs disposés le long de la direction de la longueur (Y) du système de capteur (1) aux intervalles de grille prédéterminés comprend un capteur présentant une durée dépassant le temps seuil ;
déterminer (309) un taux de largeur occupée de passagers attardés sur le système de capteur (1) par rapport à la largeur totale du système de capteur (1) sur la base du nombre de rangées qui comprennent un capteur présentant une durée dépassant le temps seuil ; et
décélérer ou arrêter l'escalier mécanique (3) en réponse à un taux de largeur occupée de passagers attardés sur le système de capteur (1) par rapport à la largeur totale du système de capteur (1) en décélérant (311) l'escalier mécanique (3) si le taux de largeur occupée de passagers attardés sur le système de capteur (1) dépasse un premier taux seuil ; et en arrêtant (313) le fonctionnement de l'escalier mécanique (3) si le taux de largeur occupée de passagers attardés sur le système de capteur (1) dépasse un deuxième taux seuil.

2. Système de capteur selon la revendication 1, dans lequel chaque capteur est disposé à des intervalles régulièrement espacés compris entre 1 et 30 centimètres.

3. Système de capteur selon la revendication 1 ou 2, dans lequel chaque capteur est configuré pour détecter une pression comprise entre 100 et 200 g/cm² de manière à obtenir une transition d'états MARCHE/ARRÊT.

4. Système de capteur selon l'une quelconque des revendications 1 à 3, dans lequel le système de capteur (1) est disposé dans une plage d'au moins un mètre le long de la direction de la longueur (Y) à partir d'une plaque de peignes.

5. Système de capteur selon l'une quelconque des revendications 1 à 4, dans lequel l'unité de commande est configurée pour balayer les signaux d'état MARCHE de tous les capteurs (5) à des intervalles compris entre 100 et 200 millisecondes.

6. Système de capteur selon l'une quelconque des revendications 1 à 5, dans lequel l'unité de commande est configurée pour détecter une présence d'un passager attardé sur le système de capteur (1) si la durée du signal d'état MARCHE d'un capteur dépasse un premier temps seuil.

7. Système de capteur selon l'une quelconque des revendications 1 à 6, dans lequel l'unité de commande est configurée pour décélérer l'escalier mécanique (3) si le taux de largeur occupée de passagers attardés sur le système de capteur (1) dépasse un premier taux seuil, et dans lequel l'unité de commande est configurée pour arrêter l'escalier mécanique (3) si le taux de largeur occupée de passagers attardés sur le système de capteur (1) dépasse un deuxième taux seuil supérieur au premier taux seuil.

8. Système de capteur selon l'une quelconque des revendications 1 à 7, dans lequel la largeur occupée de passagers comprend une largeur de la zone où les capteurs (5) détectent un passager attardé sur le système de capteur (1) et une largeur d'une zone supplémentaire pour prolonger la largeur de la zone où les capteurs détectent un passager attardé sur le système de capteur (1) de manière à simuler la largeur du corps humain.

9. Système de capteur selon l'une quelconque des revendications 6 à 8, dans lequel l'unité de commande est en outre configurée pour détecter une présence d'un objet placé sur le système de capteur (1) si la durée du signal d'état MARCHE d'un capteur dépasse un deuxième temps seuil plus long que le premier temps seuil ; et/ou dans lequel l'unité de commande est en outre configurée pour détecter un dysfonctionnement du capteur si la durée du signal d'état MARCHE du capteur dépasse un troisième temps seuil.

10. Système de capteur selon l'une quelconque des revendications 1 à 9, dans lequel le capteur est choisi dans un groupe comprenant un micro-interrupteur mécanique, un capteur de pression, un caoutchouc électroconducteur pour détecter une résistance sur la base de la pression de charge, et un capteur à fil métallique formé par une pluralité de fils disposés sur la zone d'atterrissage de la plaque d'atterrissage ; dans lequel en particulier le capteur comprend un capteur à fil métallique formé par une pluralité de fils disposés selon une disposition en grille et configuré pour obtenir un signal d'état MARCHE en mettant en contact deux lignes se croisant l'une avec l'autre en réponse à une présence de charge.

11. Procédé de contrôle du fonctionnement d'un escalier mécanique (3) utilisant un système de capteur (1) disposé sur une plaque d'atterrissage (2) à la sortie de l'escalier mécanique (3), le système de capteur (1) comprenant une pluralité de capteurs (5) disposés sur une zone d'atterrissage de la plaque d'atterrissage (2), chaque capteur étant disposé à des intervalles de grille prédéterminés par rapport à la direction de la largeur (X) le long de la largeur entre deux balustrades (4) et à la direction de la longueur (Y) le long de la direction de déplacement de l'escalier mécanique (3), chaque capteur étant configuré pour détecter une pression prédéterminée de manière à obtenir une transition d'états MARCHE/ARRÊT en réponse à une présence de charge, le procédé comprenant :
le balayage (103) en continu des signaux d'état MARCHE de tous les capteurs (5) dans une période de temps prédéterminée pour surveiller une durée de chaque signal d'état MARCHE ;
**caractérisé par** :
la comparaison (200) de la durée de chaque signal d'état MARCHE avec un temps seuil pour détecter une présence d'un passager attardé sur le système de capteur (1) ;
la détermination (301-308) si chaque rangée de capteurs disposés le long de la direction de la longueur (Y) du système de capteur (1) aux intervalles de grille prédéterminés comprend un capteur présentant une durée dépassant le temps seuil ;
la détermination (309) d'un taux de largeur occupée de passagers attardés sur le système de capteur (1) par rapport à la largeur totale du système de capteur (1) sur la base du nombre de rangées qui comprennent un capteur présentant une durée dépassant le temps seuil ;
la décélération (311) de l'escalier mécanique (3) si le taux de largeur occupée de passagers attardés sur le système de capteur (1) dépasse un premier taux seuil ; et
l'arrêt (313) du fonctionnement de l'escalier mécanique (3) si le taux de largeur occupée de passagers attardés sur le système de capteur (1) dépasse un deuxième taux seuil.

12. Procédé selon la revendication 11, dans lequel le système de capteur (1) utilisé dans le procédé est configuré selon l'une quelconque des revendications 1 à 10.

13. Procédé selon la revendication 11 ou 12, comprenant également :
la comparaison de la durée de chaque signal d'état MARCHE dépassant le temps seuil avec un deuxième temps seuil ;
la génération d'une alerte aux passagers de l'escalier mécanique concernant la présence d'un objet sur le système de capteur si la durée dépasse le deuxième temps seuil ;
la comparaison de la durée de chaque signal d'état MARCHE dépassant le deuxième temps seuil avec un troisième temps seuil ;
la détermination si chaque rangée de capteurs disposés le long de la direction de la longueur du système de capteur aux intervalles de grille prédéterminés comprend un capteur présentant une durée dépassant le troisième temps seuil ;
le comptage du nombre de capteurs dans chaque rangée dépassant le troisième temps seuil ; et
la génération d'un rapport pour demander le remplacement de l'ensemble du système de capteur si le nombre de capteurs dans chaque rangée dépassant le troisième temps seuil dépasse un nombre prédéterminé.

14. Procédé selon l'une quelconque des revendications 11 à 13, dans lequel le temps seuil est défini dans une plage comprise entre une et deux secondes ; et/ou dans lequel le premier taux seuil est défini à cinquante pour cent de la largeur totale du système de capteur ; et/ou dans lequel le deuxième taux seuil est défini à quatre-vingt-dix pour cent de la largeur totale du système de capteur.

15. Procédé selon la revendication 13, dans lequel le deuxième temps seuil est défini à dix secondes ou plus, et/ou dans lequel le troisième temps seuil est défini à un jour ou plus.
